# EUROPÄISCHE PATENTSCHRIFT

(11) **EP 3 492 410 B1**
(45) Veröffentlichungstag und Bekanntmachung des Hinweises auf die Patenterteilung: **30.10.2019**
(21) Anmeldenummer: 17204412.5
(22) Anmeldetag: 29.11.2017
(51) Int. Cl.: B65G 67/04, B65G 57/06, B65G 57/24, B65G 61/00

(54) **BELADEVORRICHTUNG**
LOADING DEVICE
DISPOSITIF DE CHARGEMENT

(43) Veröffentlichungstag der Anmeldung: 05.06.2019
(73) Patentinhaber: BEUMER Group GmbH & Co. KG, 59269 Beckum (DE)
(72) Erfinder: Dr. Werner, Andreas, 44267 Dortmund (DE)
(74) Vertreter: Philipp, Matthias

(56) Entgegenhaltungen:
- WO-A1-2010/047595
- WO-A1-2014/206418
- CH-A- 551 332
- FR-A1- 2 384 691

## Beschreibung

Die Erfindung bezieht sich auf eine Beladevorrichtung zum lageweisen Laden von Stückgutteilen auf eine Ladefläche, mit einem verfahrbaren Beladekopf, der am Ende einer Zuführstrecke eine Anzahl von bspw. fünf oder zehn Stückgutteilen wie Säcke, Beutel oder Kartons in Form einer Lage aufnimmt und die komplette Lage an einer gewünschten Position auf der Ladefläche ablegt.

Die Lagenbildung erfolgt in der Regel nach einem vorbestimmten Muster, damit eine Anzahl von übereinander abgelegten Lagen einen optimalen Zusammenhalt aufweist.

Die CH 551 332 A offenbart eine Beladevorrichtung nach dem Oberbegriff des Anspruchs 1.

Die Aufgabe der Erfindung besteht darin, eine Beladevorrichtung anzugeben, mit der eine günstige und kompakte Abgabe einer kompletten Lage möglich ist, so dass die einzelnen Stückgutteile in einer möglichst eng benachbarten Positionierung abgegeben werden und die Lage einen vorbestimmten Raum, bspw. zwischen vertikalen Seitenwänden eines Transportmittels wie Lastkraftwagen oder Wagon, bestmöglich ausfüllt.

Diese Aufgabe wird erfindungsgemäß durch eine Beladevorrichtung nach Anspruch 1 zum lageweisen Laden von Stückgutteilen auf eine Ladefläche gelöst, mit einem in mindestens einer Richtung verfahrbaren Beladekopf, in dem zum Aufnehmen einer Lage von Stückgutteilen ein Ablegeelement angeordnet ist, über dem ein Abschiebeelement quer zu einer horizontalen Verschieberichtung oder Längsrichtung angeordnet ist, wobei das Ablegeelement und das Abschiebeelement in der Verschieberichtung oder in einer Längsrichtung des Ablegeelements relativ zueinander bewegbar sind, und wobei auf dem in der Ladeposition befindlichen Ablegeelement geladene Stückgutteile durch Bewegen von Ablegeelement und Abschiebeelement relativ zueinander von dem Ablegeelement abschiebbar sind, wobei der Beladekopf, insbesondere unter dem in der Ladeposition befindlichen Ablegeelement zum Ablegen einer Lage, eine Abgabeöffnung aufweist, wobei erfindungsgemäß vorgesehen ist, dass das Ablegeelement einen zentralen Auflagebereich und an Längsseiten des Auflagebereichs anschließende Seitenwangen aufweist, die gegenüber einer Erstreckungsebene des zentralen Auflagebereichs schräg nach oben abgewinkelt sind, wobei auf jeder Seitenwange eine Reihe von in Verschieberichtung hintereinander angeordneten Stückgutteilen aufnehmbar sind.

Bevorzugt ist das Abschiebeelement ortsfest angeordnet, während das Ablegeelement in der Verschieberichtung oder Längsrichtung zwischen einer Ladeposition, in der sich das Ablegeelement über die Abgabeöffnung befinden kann, und einer Ablegeposition, in der sich das Ablegeelement benachbart zu der Abgabeöffnung, diese freigebend, befinden kann, bewegbar ist. Alternativ ist das Ablegeelement ortsfest angeordnet und das Abschiebeelement in der Verschieberichtung oder Längsrichtung zwischen einer Ladeposition und einer Ablegeposition horizontal bewegbar. Die Abgabeöffnung kann sich in diesem Fall vor dem Ablegeelement befinden.

Der Auflagebereich kann einen rechteckigen Grundriss besitzen, mit parallel zur Verschieberichtung verlaufenden Längsseiten.

Durch die Anordnung von schräg nach oben abgewinkelten Seitenwangen an dem Ablegeelement wird einerseits eine vorteilhafte Kinematik der Stückgutteile beim Ablegevorgang erreicht, da nämlich die von den Seitenwangen abgleitenden Stückgutteile eine Tendenz zu einer zu einander bzw. nach innen gerichteten Bewegung haben, so dass eine kompakte Ablage der Lage begünstigt wird. Weiterhin hat das mit schrägen Seitenwangen versehene Ablageelement den Vorteil, dass seine Breite gegenüber einer horizontalen Anordnung verringert ist, so dass eine Positionierung des Beladekopfs, der entsprechend schmaler sein kann als bei einer horizontalen Ausbildung, in seitlich begrenzten Ladeflächen bzw. Laderäumen einfacher möglich ist als im Vergleich zu einer ebenen Ausbildung des Ablegeelements.

Zweckmäßigerweise ist das Ablegeelement zwischen der Ladeposition und der Ablegeposition um eine Lagenlänge bewegbar, so dass eine Lage über ihre gesamte Länge abgeschoben wird.

Bevorzugt ist vorgesehen, dass die Seitenwange eben ist oder eine ebene Auflagefläche aufweist, wobei alternativ die Möglichkeit besteht, dass jede Seitenwange zwar insgesamt eben ist oder eine ebene Erstreckungsebene aufweist, allerdings einzelne in Verschieberichtung verlaufende Auflagerippen besitzt, um die Auflagefläche von formstabilen Stückgutteilen wie bspw. Kartons zu verkleinern. Auch der Auflagebereich kann eben sein oder aber im Ganzen eben und mit Auflagerippen versehen sein.

In einer Variante sieht die Erfindung vor, dass der zentrale Auflagebereich an seinen Längsseiten nach unten abgehende oder abgewinkelte Seitenränder aufweist, an die die Seitenwangen unter Bildung jeweils einer kanalförmigen Vertiefung anschließen. Dadurch wird erreicht, dass die von den Seitenwangen aufgenommenen Stückgutteile eine tiefere Lage im Vergleich zu der zuvor beschriebenen Ausführung aufweisen, wodurch eine andere Kinematik der Abgabebewegung erzielt wird, was sich bei bestimmten Eigenschaften von Stückgutteilen, bei bestimmten Lagemustern oder auch in dem Fall, dass die Ladefläche keine Seitenwände aufweist, als vorteilhaft herausgestellt hat. Die kanalförmige Vertiefung kann einen gerundeten oder eckigen Querschnitt aufweisen.

Die Seitenwangen können gegenüber der Erstreckungsebene des zentralen Auflagebereichs um 20° bis 70°, bevorzugt 30° bis 60° oder um etwa 40° bis 50°, bevorzugt 45° schräg nach oben abgewinkelt sein. Die Seitenränder können um 20° bis 70°, bevorzugt 30° bis 60° oder etwa 40° bis 50°, bevorzugt 45° gegenüber der Erstreckungsebene nach unten abgewinkelt sein. Bevorzugt besteht zwischen den Seitenrändern und Seitenwangen ein Winkel von 90°.

Bevorzugt ist vorgesehen, dass an einem äußeren Ende einer jeden Seitenwange ein V-förmig abgewinkeltes Abdeckelement, das einen ersten Schenkel und einen davon abgewinkelten zweiten Schenkel aufweist, um eine zwischen den Schenkeln befindliche Schwenkachse schwenkbar angelenkt ist, wobei in einer ersten Stellung der erste Schenkel die kanalförmige Vertiefung überdeckt und der zweite Schenkel sich in einer Ebene mit und in Verlängerung der jeweiligen Seitenwange erstreckt, und in der zweiten Stellung sich der erste Schenkel in einer Ebene mit und in Verlängerung der jeweiligen Seitenwange erstreckt. Bei dieser Variante ersetzt einer der Schenkel einen äußeren Teil der jeweiligen Seitenwange, so dass diese entsprechend kürzer ausgebildet sein kann als bei einer Ausführung ohne schwenkbares Abdeckelement. Die Schwenkachsen können parallel zur Verschieberichtung verlaufen. Die beiden Schenkel können um 110° bis 160°, bevorzugt um 135° gegeneinander abgewinkelt sein. Die kanalförmigen Vertiefungen und das Abdeckelement erstrecken sich bevorzugt über die volle Länge des Ablegeelements.

Der Beladekopf kann eine dem Abschiebeelement gegenüberliegende Vorderwand und benachbart zu dem Abschiebeelement angeordnete Seitenwände aufweisen, die senkrecht zu der Erstreckungsebene des Auflagebereichs des Ablegeelements angeordnet sein können. Hierbei ist bevorzugt vorgesehen, dass sich die Abgabeöffnung des Beladekopfs von der Vorderwand bis zu dem Abschiebeelement erstreckt, und weiter vorzugsweise, dass sich die Abgabeöffnung von einer Seitenwand bis zur gegenüberliegenden Seitenwand erstreckt.

In einer bevorzugten Ausführungsform ist vorgesehen, dass der zentrale Auflagebereich des Ablegeelements trapezförmig ausgebildet ist und die Längsseiten des Auflagebereichs und die Seitenwangen entgegen der Verschieberichtung oder in Längsrichtung in Richtung auf ein Abgabeende des Ablegeelements, das sich in der Ablegeposition unter dem Abschiebeelement befindet, konvergierend angeordnet sind. Der jeweils zwischen einer Längsseite oder Seitenwange und der Verschieberichtung oder Längsrichtung des Ablegeelements gebildete Winkel liegt bevorzugt zwischen 1° und 10°, weiter bevorzugt zwischen 3° und 7°, bspw. 5°. Durch die konvergierende Ausbildung des Ablegeelements erhalten die Stückgutteile eine vorteilhafte Tendenz zur kompakten Ablage, wobei eine gewisse Komprimierung oder Kompaktierung der zwischen den auf den Seitenwangen angeordneten Stückgutteilen befindlichen Stückgutteile erzielt werden kann.

Bei einer Ausführung mit kanalförmigen Vertiefungen können die kanalförmigen Vertiefungen in Richtung auf ein Abgabeende des Ablegeelements, das sich in der Ablegeposition unter dem Abschiebeelement befindet, konvergierend angeordnet sein, bevorzugt parallel zu den Seitenwangen. Bei Bedarf können die kanalförmigen Vertiefungen durch Einlegeelemente mit dreieckigem Querschnitt ausgefüllt bzw. geschlossen sein.

Der Beladekopf kann eine Rückwand aufweisen, wobei sich das Abschiebeelement mittig zwischen der Rückwand und der Vorderwand befinden kann.

Die Erfindung wird nachfolgend anhand von Ausführungsbeispielen beschrieben, wobei auf eine Zeichnung Bezug genommen wird, in der
- Fig. 1a, b: schematisch eine bekannte Beladevorrichtung zum Beladen eines Lastkraftwagens mit Stückgutteilen in einer Seitenansicht zeigen,
- Fig. 2a, b: die Beladevorrichtung nach Fig. 1 in einer Draufsicht zeigen,
- Fig. 3a-d: einen Beladevorgang mit der bekannten Beladevorrichtung nach Fig. 1 und 2 schematisch erläutern,
- Fig. 4a-d: eine erfindungsgemäße Beladevorrichtung und einen damit ausgeführten Beladevorgang erläutern,
- Fig. 5a-d und 6a, b: zwei Varianten einer erfindungsgemäßen Beladevorrichtung und einen damit ausgeführten Beladevorgang erläutern,

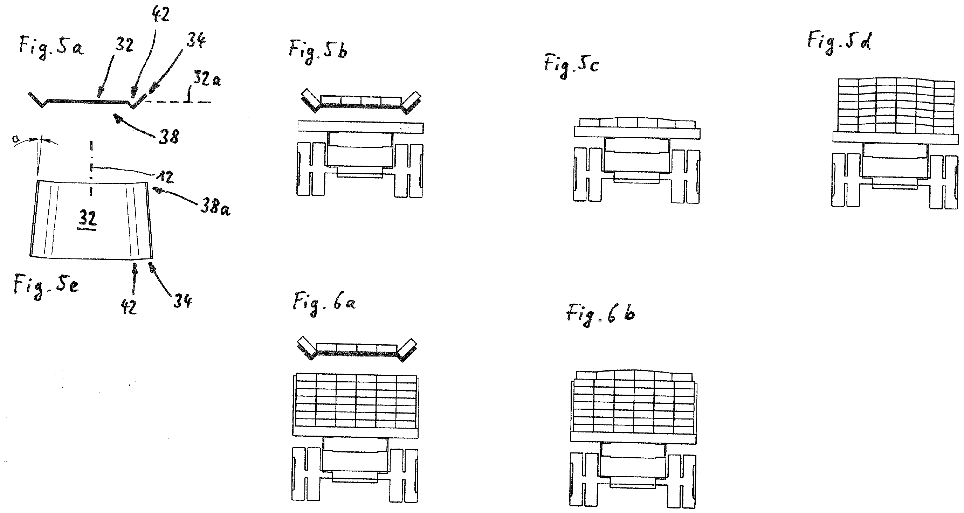

- Fig. 5^{e}: eine schematische Draufsicht auf eine Variante eines Ablegeelements gemäß Fig. 5 und 6 zeigt, und

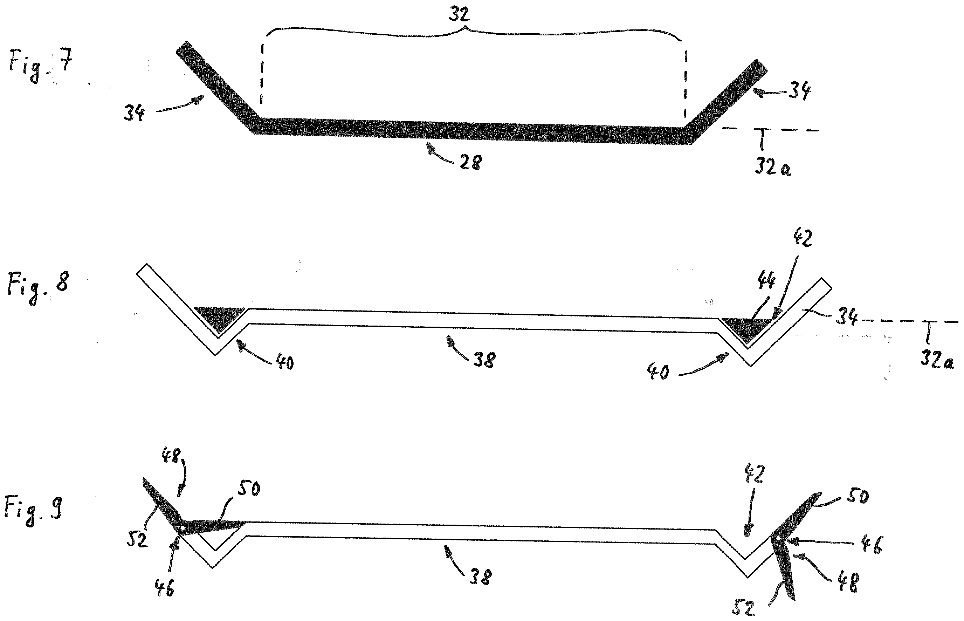

- Fig. 7-9: Querschnittsansichten verschiedener Varianten von Ablegeelementen zeigen.

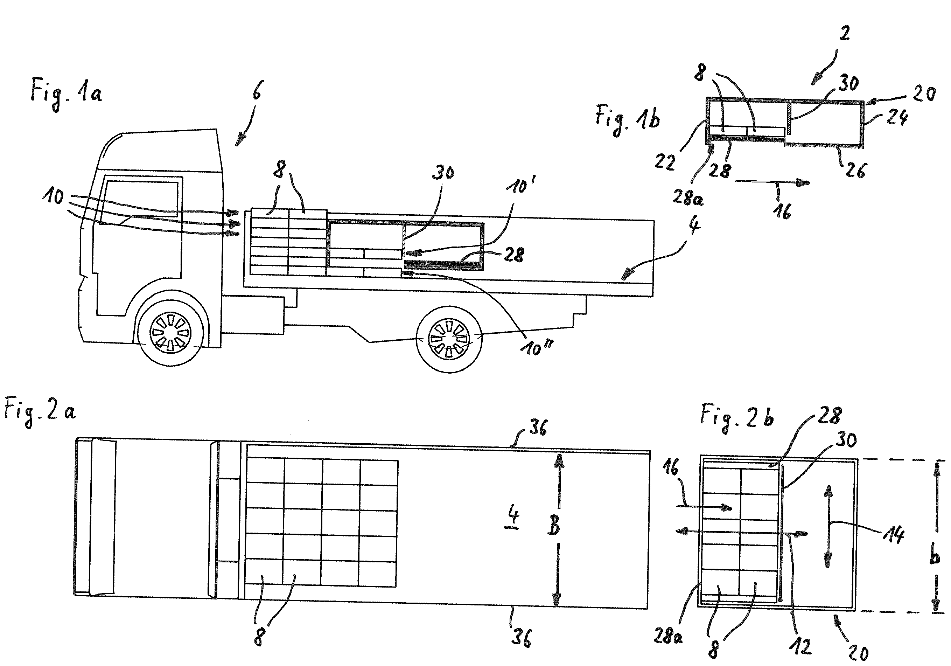

Fig. 1 und 2 erläutern einen Beladevorgang mit Hilfe einer an sich bekannten Beladevorrichtung 2, wobei eine Ladefläche 4 eines Lastkraftwagens 6 lageweise mit Stückgutteilen 8 beladen wird. Jede einzelne Lage 10 von Stückgutteilen 8 wird als Ganzes von der Ladevorrichtung 2 auf die Beladefläche 4 oder auf eine bereits abgelegte Lage 10 abgelegt.

In dem dargestellten Beispiel umfasst jede Lage 10 insgesamt zehn Stückgutteile 8, wobei jeweils zwei Stückgutteile 8 in einer Längsrichtung 12 hintereinander und fünf Stückgutteile 8 in einer Querrichtung 14 nebeneinander angeordnet sind.

Die Beladevorrichtung 2 weist einen Beladekopf 20 auf, der in mindestens einer Richtung, bspw. in zwei oder drei Richtungen, verfahrbar ist, wobei der Beladekopf 20 in dem dargestellten Beispiel zumindest in Längs- und Querrichtung 12, 14 verfahrbar ist, um den Lastkraftwagen 6 der Länge und Höhe nach beladen zu können. Der Beladekopf 20 ist an einer nicht dargestellten Trage- und Antriebsvorrichtung gehalten, mit der er in den genannten Richtungen verfahren werden kann, und zwar zwischen einer Entladestellung, die in Fig. 1a dargestellt ist, um eine Lage in einer bestimmten Position auf der Ladefläche 4 oder auf einer bereits abgelegten Lage 10 abzulegen, und einer Ladestellung, die sich bspw. an einem Abgabeende einer Fördereinrichtung befindet, mit der Stückgutteile 8 herantransportierbar sind und an der der Beladekopf 20 mit den einer Lage entsprechenden Anzahl von Stückgutteilen beladen werden kann.

Fig. 1b zeigt den Beladekopf 20 allein, wobei neben einer Vorderwand 22, einer Rückwand 24 und einer Bodenwand 26 ein Ablegeelement 28 dargestellt ist, das unter einem ortsfest gehaltenen Abschiebeelement 30 zwischen einer in Fig. 1b dargestellten Ladeposition und einer in Fig. 1a dargestellten Ablegeposition in einer parallel zur Längsrichtung 12 verlaufenden Verschieberichtung 16 bewegbar ist. Das Abschiebeelement 30 ist quer zur Verschieberichtung 16 angeordnet, so dass durch Bewegen des Ablegeelements 28 aus der Ladeposition (Fig. 1b) in die Ablegeposition (Fig. 1a) die gesamte von dem Ablegeelement 28 aufgenommene Lage 10 von Stückgutteilen 8 abgelegt werden kann. Fig. 1a zeigt diese abzugebende Lage 10' der Deutlichkeit halber noch in einer angehobenen Position, wobei sich die Lage 10' jedoch ersichtlich nach Rückzug des Ablageelements 28 unmittelbar auf die darunter und unmittelbar auf der Ladefläche 4 befindliche Lage 10" absenkt.

Fig. 2b zeigt eine schematisierte Draufsicht auf die Beladevorrichtung 20, aus der sich ergibt, dass eine äußere Breite b des Beladekopfs 20 an die Ladefläche 4 des Lastkraftwagens 6 angepasst ist und etwas geringer ist als eine lichte Breite B der Ladefläche 4 zwischen Seitenwänden 36 des Lastkraftwagens.

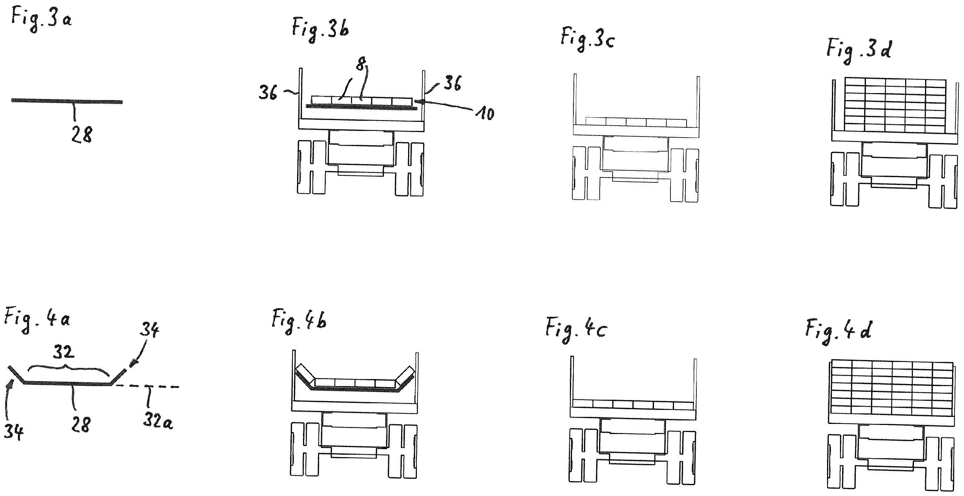

Fig. 3a bis d veranschaulichen den vorstehend beschriebenen Beladevorgang vereinfacht, wobei lediglich das Ablegeelement 28 des Beladekopfs 20 dargestellt ist. Damit der Beladekopf zwischen die Seitenwände des Lastkraftwagens bewegt werden kann, kann das Ablegeelement 28 nur eine bestimmte maximale Breite besitzen, so dass die Ladefläche des Lastkraftwagens nicht vollständig zwischen den Seitenwänden ausgefüllt werden kann. Es verbleibt somit zwangsläufig ein Freiraum zwischen den lageweise aufgestapelten Stückgutteilen 8 und den Seitenwänden 36 des Lastkraftwagens (Fig. 3d).

Mit einem in Fig. 4a dargestellten Ablegeelement und einem damit versehenen erfindungsgemäßen Beladekopf besteht dagegen die Möglichkeit, die Ladefläche 4 des Lastkraftwagens 6 in ihrer vollen Breite und mit einer gegenüber dem Stand der Technik größeren Breite und/oder Anzahl, in Querrichtung gesehen, von Stückgutteilen 8 in jeder Lage zu beladen.

Das in Fig. 7 vergrößert im Querschnitt dargestellte Ablegeelement 28 weist einen zentralen Auflagebereich 32 auf, der in einer Erstreckungsebene 32a verläuft, wobei an Längsseiten des Auflagebereichs 32 jeweils eine Seitenwange 34 anschließt, die gegenüber der Erstreckungsebene 32a des Auflagebereichs 32 schräg nach oben abgewinkelt ist.

Die Seitenwangen 34 haben die Aufgabe, jeweils eine Reihe von Stückgutteilen 8 in Längsrichtung 12 hintereinander ganz oder teilweise aufzunehmen, neben den auf dem zentralen Auflagebereich 32 angeordneten Stückgutteilen, wie in Fig. 4b dargestellt ist. Aufgrund der abgewinkelten Anordnung der Seitenwangen 34 und der darauf angeordneten Stückgutteile wird eine Verringerung der effektiven Breite des Ablegeelements und auch der darauf angeordneten Lage von Stückgutteilen erreicht, so dass eine größere Anzahl von und/oder breitere Stückgutteile in einer Lage untergebracht werden können, die dann den zur Verfügung stehenden Raum auf einer gegebenen Ladefläche bestmöglich ausfüllen, wie in Fig. 4c dargestellt ist.

Für den in Fig. 4a bis d veranschaulichten Beladevorgang wird zum Laden einer Lage von Stückgutteilen jeweils die mit einem wie in Fig. 4a dargestellten Ablegeelement 28 versehene Beladevorrichtung 2 mit den einer Lage entsprechenden Stückgutteilen in der in Fig. 4b gezeigten Weise beladen und anschließend von ihrer Ladestellung zu einer Entladestellung bewegt, in der sich das Ablegeelement 28 oberhalb einer gewünschten Position der Ladefläche 4 oder oberhalb einer anderen Lage von Stückgutteilen befindet. Anschließend wird das Ablegeelement 28 in Verschieberichtung 16 unter dem Abschiebeelement 30 in die Ablegeposition bewegt und somit unter den darauf befindlichen Stückgutteilen weggezogen, bis sich ein vorderes Ende oder Abgabeende 28a des Ablegeelements unter dem Abschiebeelement 30 befindet, so dass die einer Lage entsprechenden Stückgutteile von dem Ablegeelement abgeschoben werden und auf ihre vorgesehene Position auf der Ladefläche 4 gelangen. Alternativ kann das Abschiebeelement 30 horizontal zwischen einer Ladeposition und einer Ablegeposition beweglich angeordnet sein. Durch diese horizontale Bewegung können die sich auf dem Ablegeelement 28 befindlichen Stückgutteile vom Ablegeelement 28 abgeschoben werden. Aufgrund der schrägen Anordnung der auf den Seitenwangen 34 befindlichen Stückgutteile haben diese beim Abschiebevorgang die Tendenz, nach innen in Richtung des zentralen Auflagebereichs 32 des Ablegeelements 28 zu rutschen. Diese Tendenz kann durch die Ladefläche 4 seitlich begrenzende Seitenwände 36 noch verstärkt werden, bis sich ein vorderes Ende oder Abgabeende 28a des Ablegeelements unter dem Abschiebeelement 30 befindet, so dass bei entsprechender Dimensionierung des Ablegeelements 28 und der darauf angeordneten Lage von Stückgutteilen eine optimale Ausfüllung der Ladefläche 4 und des zur Verfügung stehenden Bereichs zwischen den Seitenwänden 36 möglich ist. Auf diese Weise kann das gesamte zur Verfügung stehende Ladevolumen optimal genutzt werden, wie Fig. 4d zeigt.

Fig. 4a und Fig. 7 zeigen ein mit schrägen Seitenwangen 34 versehenes Ablegeelement 28 im Querschnitt, während Fig. 5a, 8 und 9 eine andere Ausführungsform in zwei Varianten zeigen. Das Ablegeelement 38 nach Fig. 5a, 8 und 9 weist ebenso wie das Ablegeelement 28 einen zentralen Auflagebereich 32 auf, der in einer Erstreckungsebene 32a verläuft. In der dargestellten Variante weist der zentrale Auflagebereich nach unten verlaufende oder abgewinkelte Seitenränder 40 auf, an die schräg nach oben abgewinkelte Seitenwangen 34 unter Bildung jeweils einer kanalförmigen Vertiefung 42 anschließen.

Aufgrund der kanalförmigen Vertiefung 42 sind die außen im Bereich der Seitenwangen 34 von dem Ablegeelement 38 aufgenommenen Stückgutteile 8 in Bezug auf den zentralen Auflagebereich 32 leicht vertieft angeordnet, wodurch die bereits beschriebene Tendenz der Stückgutteile zu einer nach innen gerichteten Bewegung beim Ablegevorgang begünstigt werden kann, was insbesondere bei einer Lagefläche ohne seitliche Begrenzungswände vorteilhaft ist. Obwohl die kanalförmige Vertiefung einen abgerundeten Querschnitt aufweisen kann, ist die Anordnung bevorzugt so, dass die an den zentralen Auflagebereich 32 anschließenden Seitenränder 40 rechtwinklig zu den Seitenwangen 34 verlaufen, so dass die kanalförmige Vertiefung 42 einen rechtwinklig-dreieckigen Querschnitt besitzt. Bei einer solchen Ausführung werden quaderförmige Stückgüter Stückgutteile optimal abgestützt, und auch verformbare Stückgutteile wie bspw. Säcke werden in einer Form abgestützt, die die Ablage in ebenen Lagen und ggf. zwischen vertikalen Seitenwänden unterstützt. Wie Fig. 8 zeigt, können die kanalförmigen Vertiefungen 42 bedarfsweise durch Einlegeelemente 44 mit dreieckigem Querschnitt geschlossen werden, so dass sich effektiv eine Ausführung des Ablegeelements entsprechend Fig. 7 ergibt.

Bei der Variante nach Fig. 9 ist vorgesehen, dass an die abgewinkelten Seitenwangen 34 jeweils ein um eine Schwenkachse 46 schwenkbares, V-förmig abgewinkeltes Abdeckelement 48 angelenkt ist, mit dem wahlweise eine Ausführung mit oder ohne kanalförmige Vertiefung gebildet werden kann. Das Abdeckelement 48 weist einen ersten Schenkel 50 und einen davon abgewinkelten zweiten Schenkel 52 auf, zwischen denen die Schwenkachse 46 angeordnet ist. Das Abdeckelement 48 erstreckt sich über die Länge des Ablegeelements 38 und kann in eine der in Fig. 9 dargestellten Stellungen verschwenkt werden, wobei in der in Fig. 9 links abgebildeten Stellung der erste Schenkel 50 die kanalförmige Vertiefung 42 überdeckt und der zweite Schenkel 52 sich in einer Ebene mit und in Verlängerung der Seitenwange 34 erstreckt. In der in Fig. 9 rechts dargestellten Stellung kann die kanalförmige Vertiefung 42 genutzt werden, wobei sich der erste Schenkel in einer Ebene mit und in Verlängerung der Seitenwange 34 erstreckt. Der zweite Schenkel 52 weist in dieser Stellung von der Seitenwange 34 nach unten.

Fig. 5e erläutert in einer schematischen Draufsicht auf ein Ablegeelement 38 eine Option, die bei allen Ablegeelementen einer erfindungsgemäßen Beladevorrichtung vorgesehen sein kann, wobei das Ablegeelement insgesamt entgegen der Verschieberichtung 16 konvergierend ausgebildet ist. Hierbei ist der zentrale Auflagebereich 32 des Ablegeelements trapezförmig ausgebildet, und die Längsseiten des Auflagebereichs und die Seitenwangen konvergieren in Richtung auf das Abgabeende 38a des Ablegeelements, bzw. entgegen der Verschieberichtung. Soweit kanalartige Vertiefungen 42 vorgesehen sind, konvergieren auch diese in Richtung des Abgabeendes. Eine solche Ausführung unterstützt ersichtlich die gewünschte kompakte Ablage einer Lage, wobei wie in Fig. 5c, d und Fig. 6b angedeutet ist, alle Lagen bei einer Beladung auf eine Ladefläche ohne Seitenwände oder die oberste Lage, die oberhalb von Seitenwänden liegt, unter Kompaktierung oder Komprimierung derjenigen Stückgutteile erfolgen kann, die sich zwischen den von den Seitenwangen getragenen Stückgutteilen befinden.

Der in Fig. 5e angegebene Winkel a, unter dem jeweils eine Seitenwange oder kanalförmige Vertiefung relativ zur Längsrichtung oder Verschieberichtung konvergiert, kann zwischen 1° und 10°, bspw. 5° betragen.

### Bezugszeichenliste

- 2: Beladevorrichtung
- 4: Ladefläche
- 6: Lastkraftwagen
- 8: Stückgutteil
- 10, 10', 10": Lage
- 12: Längsrichtung
- 14: Querrichtung
- 16: Verschieberichtung
- 20: Beladekopf
- 22: Vorderwand
- 24: Rückwand
- 26: Bodenwand
- 28,38: Ablegeelement
- 28a,38a: Abgabeende
- 30: Abschiebeelement
- 32: zentraler Auflagebereich
- 32a: Erstreckungsebene
- 34: Seitenwange
- 36: Seitenwand
- 40: Seitenrand
- 42: Vertiefung
- 44: Einlegeelement
- 46: Schwenkachse
- 48: Abdeckelement
- 50: erster Schenkel
- 52: zweiter Schenkel
- α: Winkel
- b: äußere Breite (von 20)
- B: lichte Breite (von 4)

## Patentansprüche

1. Beladevorrichtung (2) zum lageweisen Laden von Stückgutteilen (8) auf eine Ladefläche (4), mit einem in mindestens einer Richtung verfahrbaren Beladekopf (20), in dem zum Aufnehmen einer Lage von Stückgutteilen (8) ein Ablegeelement (28, 38) angeordnet ist, über dem ein Abschiebeelement (30) quer zu einer horizontalen Verschieberichtung (16) angeordnet ist, wobei das Ablegeelement und das Abschiebeelement in der Verschieberichtung relativ zueinander bewegbar sind, und wobei auf dem in der Ladeposition befindlichen Ablegeelement (28, 38) geladene Stückgutteile (8) durch Bewegen von Ablegeelement (28, 38) und Abschiebeelement relativ zueinander von dem Ablegeelement (28, 38) abschiebbar sind, wobei der Beladekopf (20) zum Abgeben einer Lage eine Abgabeöffnung aufweist und das Ablegeelement (28,38) einen zentralen Auflagebereich (32) aufweist, **dadurch gekennzeichnet, dass** das Ablegeelement (28, 38) an Längsseiten des Auflagebereichs (32) anschließende Seitenwangen (34) aufweist, die gegenüber einer Erstreckungsebene (32a) des zentralen Auflagebereichs (32) schräg nach oben abgewinkelt sind, wobei auf jeder Seitenwange (34) eine Reihe von in Verschieberichtung (16) hintereinander angeordnete Stückgutteile (8) aufnehmbar sind.

2. Beladevorrichtung nach Anspruch 1, **dadurch gekennzeichnet, dass** das Ablegeelement (28, 38) zwischen der Ladeposition und der Ablegeposition um eine Lagenlänge bewegbar ist.

3. Beladevorrichtung nach Anspruch 1 oder 2, **dadurch gekennzeichnet, dass** jede Seitenwange (34) eben ist.

4. Beladevorrichtung nach einem der vorangehenden Ansprüche, **dadurch gekennzeichnet, dass** der zentrale Auflagebereich (32) nach unten verlaufende oder abgewinkelte Seitenränder (40) aufweist, an die die Seitenwangen (34) unter Bildung jeweils einer kanalförmigen Vertiefung (42) anschließen.

5. Beladevorrichtung nach Anspruch 4, **dadurch gekennzeichnet, dass** an einem äußeren Ende einer jeden Seitenwange (34) ein V-förmig abgewinkeltes Abdeckelement (48) mit einem ersten Schenkel (50) und einem davon abgewinkelten zweiten Schenkel (52) um eine zwischen den Schenkeln (50, 52) angeordnete Schwenkachse (46) schwenkbar angelenkt ist, wobei in einer ersten Stellung der erste Schenkel (50) die kanalförmige Vertiefung (42) überdeckt und der zweite Schenkel (52) sich in einer Ebene und in Verlängerung mit der jeweiligen Seitenwange (34) erstreckt, und in der zweiten Stellung sich der erste Schenkel (50) in einer Ebene mit und in Verlängerung der jeweiligen Seitenwange (34) erstreckt.

6. Beladevorrichtung nach einem der vorangehenden Ansprüche, **dadurch gekennzeichnet, dass** der Beladekopf (20) eine dem Abschiebeelement (30) gegenüberliegende Vorderwand (22) und benachbart zu dem Abschiebeelement (28, 38) angeordnete Seitenwände aufweist, die senkrecht zu der Erstreckungsebene (32a) des Auflagebereichs (32) des Ablegeelements (28, 38) angeordnet sind.

7. Beladevorrichtung nach Anspruch 6, **dadurch gekennzeichnet, dass** sich die Abgabeöffnung des Beladekopfs (20) von der Vorderwand (22) bis zu dem Abschiebeelement (30) erstreckt.

8. Beladevorrichtung nach Anspruch 6 oder 7, **dadurch gekennzeichnet, dass** sich die Abgabeöffnung von einer Seitenwand bis zu einer gegenüberliegenden Seitenwand des Beladekopfs (20) erstreckt.

9. Beladevorrichtung nach einem der Ansprüche 6 bis 8, **dadurch gekennzeichnet, dass** der Beladekopf (20) eine Rückwand (24) aufweist, wobei sich das Abschiebeelement (30) mittig zwischen der Rückwand (24) und der Vorderwand (22) befindet.

10. Beladevorrichtung nach einem der vorangehenden Ansprüche, **dadurch gekennzeichnet, dass** der zentrale Auflagebereich (32) des Abschiebeelements (38) trapezförmig ausgebildet ist und die Seitenwangen (34) in Richtung auf ein Abgabeende (38a) des Ablegeelements (38), das sich in der Ablegeposition unter dem Abschiebeelement (30) befindet, konvergierend angeordnet sind.

11. Beladevorrichtung nach einem der vorangehenden Ansprüche, soweit auf Anspruch 4 rückbezogen, **dadurch gekennzeichnet, dass** die kanalförmigen Vertiefungen (42) in Richtung auf ein Abgabeende (38a) des Ablegeelements (38), das sich in der Ablegeposition unter dem Abschiebeelement (30) befindet, konvergierend angeordnet sind.

12. Beladevorrichtung nach einem der vorangehenden Ansprüche, **dadurch gekennzeichnet, dass** die Seitenwangen (34) gegenüber der Erstreckungsebene (32a) des zentralen Auflagebereichs (32) um 20° bis 70°, insbesondere 45° abgewinkelt sind.

13. Beladevorrichtung nach einem der vorangehenden Ansprüche, soweit auf Anspruch 4 rückbezogen, **dadurch gekennzeichnet, dass** die Seitenränder (40) um 20° bis 70°, insbesondere 45° gegenüber der Erstreckungsebene (32a) des zentralen Auflagebereichs (32) nach unten abgewinkelt sind.

14. Beladevorrichtung nach einem der vorangehenden Ansprüche, soweit auf Anspruch 4 rückbezogen, **dadurch gekennzeichnet, dass** zwischen den Seitenrändern (40) und den Seitenwangen (34) ein Winkel von 90° besteht.

15. Beladevorrichtung nach einem der vorangehenden Ansprüche, soweit auf Anspruch 5 rückbezogen, **dadurch gekennzeichnet, dass** der erste Schenkel (50) gegenüber dem zweiten Schenkel (52) um 110° bis 160°, insbesondere um 135° abgewinkelt ist.

16. Beladevorrichtung nach einem der vorangehenden Ansprüche, soweit auf Anspruch 4 rückbezogen, **dadurch gekennzeichnet, dass** die kanalförmigen Vertiefungen (42) durch Einlegeelemente (44) mit dreieckigem Querschnitt geschlossen sind.

## Claims

1. Loading device (2) for loading piece goods (8) in layers onto a loading area (4), with a loading head (20), movable in at least one direction, in which a setting down element (28, 38) is arranged for picking up a layer of piece goods (8), over which a shunting element (30) is arranged transverse to a horizontal shift direction (16), wherein the setting down element and the shunting element can be moved relatively to each other in the shift direction, and wherein piece goods (8) loaded on the setting down element (28, 38) being in the loading position can be shunted relatively to each other by moving setting down element (28, 38) and shunting element from the setting down element (28, 38), the loading head (20) having a delivery opening for releasing a layer and the setting down element (28, 38) having a central support area (32), **characterized in that** the setting down element (28, 38) on long sides of the support area (32) has adjoining side plates (34), which are diagonally angled upwards in relation to an extending plane (32a) of the central support area (32), whereby a series of piece goods (8) placed on each side plate (34) one behind another in the shift direction (16) can be picked up.

2. Loading device according to claim 1, **characterized in that** the setting down element (28, 38) can be moved between the loading position and the setting down position by a layer length.

3. Loading device according to claim 1 or 2, **characterized in that** each side plate (34) is even.

4. Loading device in accordance with one of the preceding claims, **characterized in that** the central support area (32) has downward running or angled side edges (40), to which the side plates (34) adjoin forming a channel-shaped recess (42) in each case.

5. Loading device according to claim 4, **characterized in that** at an outside end of each side plate (34) a V-shaped angled cover (48) with a first leg (50) and a second leg (52), bent therefrom, is articulated around a pivot axis (46) arranged between the legs (50, 52), in a first position the first leg (50) covering the channel-shaped recess (42) and the second leg (52) running in a plane and in extension with the respective side plate (34), and in the second position the first leg (50) also running in a plane and in extension of the respective side plate (34).

6. Loading device in accordance with one of the preceding claims, **characterized in that** the loading head (20) has a front wall (22) lying opposite the shunting element (30) and side panels, arranged adjacent to the shunting element (28, 38), which are located perpendicularly to the extending plane (32a) of the support area (32) of the setting down element (28, 38).

7. Loading device according to claim 6, **characterized in that** the delivery opening of the loading head (20) extends from the front wall (22) up to the shunting element (30).

8. Loading device according to claim 6 or 7, **characterized in that** the delivery opening extends from a side panel up to an opposite side panel of the loading head (20).

9. Loading device in accordance with one of claims 6 to 8, **characterized in that** the loading head (20) has a rear wall (24), the shunting element (30) being located centrally between the rear wall (24) and the front wall (22).

10. Loading device in accordance with one of the preceding claims, **characterized in that** the central support area (32) of the shunting element (38) is trapeze-shaped and the side plates (34) are arranged so as to converge in the direction of a delivery end (38a) of the setting down element (38), which in the setting down position is below the shunting element (30).

11. Loading device in accordance with one of the preceding claims, as far as it relates back to claim 4, **characterized in that** the channel-shaped recesses (42) are arranged so as to converge in the direction of a delivery end (38a) of the setting down element (38), which in the setting down position is below the shunting element (30).

12. Loading device in accordance with one of the preceding claims, **characterized in that** the side plates (34) are angled by 20° to 70°, in particular 45°, in relation to the extending plane (32a) of the central support area (32).

13. Loading device in accordance with one of the preceding claims, as far as it relates back to claim 4, **characterized in that** the side edges (40) are angled downwards by 20° to 70°, in particular 45°, in relation to the extending plane (32a) of the central support area (32).

14. Loading device in accordance with one of the preceding claims, as far as it relates back to claim 4, **characterized in that** there is an angle of 90° between the side edges (40) and the side plates (34).

15. Loading device in accordance with one of the preceding claims, as far as it relates back to claim 5, **characterized in that** the first leg (50) is angled by 110° to 160°, in particular 135°, in relation to the second leg (52).

16. Loading device in accordance with one of the preceding claims, as far as it relates back to claim 4, **characterized in that** the channel-shaped recesses (42) are closed by inserts (44) with triangular cross section.

## Revendications

1. Dispositif de chargement (2) pour assurer le chargement de marchandises (8) en plusieurs couches dans une zone de chargement (4), avec une tête de chargement (20), pouvant se déplacer dans au moins une direction, et dans laquelle un élément de pose (28, 38) est implanté pour saisir une couche de marchandises (8), et au-dessus duquel est inséré un élément d'aiguillage (30), dans le sens transversal par rapport à un sens de déplacement horizontal (16), et cet élément de pose et cet élément d'aiguillage peuvent se déplacer l'un par rapport à l'autre, dans le sens de déplacement, et les marchandises (8) ainsi chargées sur l'élément de pose (28, 38), en position de charge, peuvent faire l'objet d'un aiguillage les unes par rapport aux autres en déplaçant l'élément de pose(28, 38) et en écartant l'élément d'aiguillage de l'élément de pose (28, 38), et la tête de chargement (20) comporte une ouverture de livraison qui permet de relâcher une couche et l'élément de pose (28, 38) a une aire centrale de soutien (32), avec les caractéristiques suivantes : l'élément de pose (28, 38), sur les côtés longs de l'aire de soutien (32), comporte des plaques latérales mitoyennes (34), qui sont disposées en diagonale et sous un angle pointant vers le haut par rapport à un plan d'extension (32a) de l'aire centrale de soutien (32), ce qui permet de saisir, l'une après l'autre, une série de marchandises (8) disposées sur chaque plaque latérale (34), l'une après l'autre dans le sens du déplacement (16).

2. Le dispositif de chargement que décrit la revendication 1, et **se caractérisant par le fait que** l'élément de pose (28, 38) est en mesure de se déplacer entre la position de chargement et la position de pose sur une distance correspondant à la longueur d'une couche.

3. Le dispositif de chargement que décrit la revendication 1 ou 2, et **se caractérisant par le fait que** chaque plaque latérale (34) est régulière.

4. Le dispositif de chargement que décrit l'une ou l'autre des revendications précédentes, et **se caractérisant par le fait que** l'aire centrale de soutien (32) a des bordures pointant vers le bas ou inclinées sous un certain angle (40) et, dans chaque cas, les plaques latérales (34) y sont attenantes, afin de former une partie en creux en forme de canal (42).

5. Le dispositif de chargement que décrit la revendication 4, et **se caractérisant par le fait qu'**au niveau d'une extrémité externe de chaque plaque latérale (34), un couvercle de forme trapézoïdale (48) comportant un premier montant (50) et un deuxième montant (52), qui viennent se replier depuis ce niveau, s'articule autour d'un axe pivotant (46) et est implanté entre les montants (50, 52) et, au niveau d'une première position, le premier montant (50) recouvre la partie en creux en forme de canal (42) alors que le deuxième montant (52) se déplace sur un plan et dans le prolongement de la plaque latérale respective (34), alors qu'au niveau d'une deuxième position, le premier montant (50) se déplace également sur un plan et dans le prolongement de la plaque latérale respective (34).

6. Le dispositif de chargement que décrit l'une ou l'autre des revendications précédentes, et **se caractérisant par le fait que** la tête de chargement (20) a une paroi avant (22) qui se trouve du côté opposé à l'élément d'aiguillage (30) et des panneaux latéraux qui sont attenants à l'élément d'aiguillage (28, 38), avec une implantation à la perpendiculaire du plan d'extension (32a) de l'aire de soutien (32) de l'élément de pose (28, 38).

7. Le dispositif de chargement que décrit la revendication 6, et **se caractérisant par le fait que** l'ouverture de livraison de la tête de chargement (20) relie la paroi avant (22) à l'élément d'aiguillage (30).

8. Le dispositif de chargement que décrit la revendication 6 ou 7, et **se caractérisant par le fait que** l'ouverture de livraison relie un panneau latéral à un panneau latéral se situant sur le côté opposé de la tête de chargement (20).

9. Le dispositif de chargement que décrit l'une ou l'autre des revendications 6 à 8, et **se caractérisant par le fait que** la tête de chargement (20) a une paroi arrière (24) et que l'élément d'aiguillage (30) occupe un emplacement central entre la paroi arrière (24) et la paroi avant (22).

10. Le dispositif de chargement que décrit l'une ou l'autre des revendications précédentes, et **se caractérisant par le fait que** l'aire centrale de soutien (32) de l'élément d'aiguillage (38) a une forme trapézoïdale et que les plaques latérales (34) sont disposées de manière à converger vers une extrémité de livraison (38a) de l'élément de pose (38) qui, en position de pose, se situe au-dessous de l'élément d'aiguillage (30).

11. Le dispositif de chargement que décrit l'une ou l'autre des revendications précédentes, dans la mesure où cela se réfère à la revendication 4, et **se caractérisant par le fait que** les parties en creux en forme de canal (42) sont disposées de manière à converger vers une extrémité de livraison (38a) de l'élément de pose (38), qui, en position de pose, se situe au-dessous de l'élément d'aiguillage (30).

12. Le dispositif de chargement que décrit l'une ou l'autre des revendications précédentes, et **se caractérisant par le fait que** les plaques latérales (34) font un angle compris entre 20 et 70° et, en particulier, égal à 45°, par rapport au plan d'extension (32a) de l'aire centrale de soutien (32).

13. Le dispositif de chargement que décrit l'une ou l'autre des revendications précédentes, dans la mesure où cela se réfère à la revendication 4, et **se caractérisant par le fait que** les bords latéraux (40) font un angle descendant compris entre 20 et 70° et, en particulier, égal à 45°, par rapport au plan d'extension (32a) de l'aire centrale de soutien (32).

14. Le dispositif de chargement que décrit l'une ou l'autre des revendications précédentes, dans la mesure où cela se réfère à la revendication 4, et **se caractérisant par le fait qu'**il y a un angle de 90° entre les bords latéraux (40) et les plaques latérales (34).

15. Le dispositif de chargement que décrit l'une ou l'autre des revendications précédentes, dans la mesure où cela se réfère à la revendication 5, et **se caractérisant par le fait que** le premier montant (50) fait un angle compris entre 110 et 160° et, en particulier, un angle égal à 135°, par rapport au deuxième montant (52).

16. Le dispositif de chargement que décrit l'une ou l'autre des revendications précédentes, dans la mesure où cela se réfère à la revendication 4, et **se caractérisant par le fait que** les parties en creux en forme de canal (42) sont fermées par des pièces rapportées (44) de coupe triangulaire.
